# EUROPEAN PATENT APPLICATION

(11) **EP 4 667 528 A1**
(43) Date of publication of application: **24.12.2025**
(21) Application number: 24901126.3
(22) Date of filing: 06.12.2024
(51) Int. Cl.: C08L 67/02, C08L 3/02, C08G 63/91, C08J 5/18

(54) **BIODEGRADABLE COMPOSITION AND BIODEGRADABLE FILM**

(30) Priority: 08.12.2023 KR 20230177650; 05.12.2024 KR 20240179458
(71) Applicant: LG Chem, Ltd., Seoul 07336 (KR)
(72) Inventor: JE, Hwaheon, Daejeon 34122 (KR); SHIM, Hong Shik, Daejeon 34122 (KR); YUN, Haesung, Daejeon 34122 (KR); PARK, Hyunwoo, Daejeon 34122 (KR); KIM, Hyunju, Daejeon 34122 (KR); KWAK, Sooyoung, Daejeon 34122 (KR); MOON, Jungmi, Daejeon 34122 (KR); JUNG, Jin Young, Daejeon 34122 (KR)
(74) Representative: Goddar, Heinz J.
(86) International application number: PCT/KR2024/019938
(87) International publication number: WO 2025/121940

(57) **Abstract**

In this invention, a biodegradable composition and a biodegradable film are provided, which include polybutylene adipate terephthalate with maleic acid ester-bonded to the terminal hydroxyl group and have a predetermined peak area ratio.

## Description

### FIELD OF THE INVENTION

### CROSS-REFERENCE TO RELATED APPLICATION(S)

The present application is based on, and claims priority from, Korean Patent Application No. 10-2023-0177650, filed on December 8, 2023, and Korean Patent Application No. 10-2024-0179458, filed on December 5, 2024, respectively, the disclosures of which are hereby incorporated by reference herein in their entirety.

The present invention relates to a biodegradable composition and a biodegradable film.

### BACKGROUND OF THE INVENTION

With the recent surge in interest in environmental protection and eco-friendliness, there is an increasing need for methods of cultivating eco-friendly agricultural products. One such eco-friendly agricultural method is known as mulching, where the soil surface is covered with a mulching film during crop cultivation. This prevents the growth of weeds, protects against pests, maintains soil moisture, regulates soil temperature, prevents soil erosion due to rainwater, and reduces pesticide use.

Although mulching films greatly contribute to the productivity of agricultural products, they pose challenges in terms of collection and recycling after use. Typically, synthetic resins such as polypropylene and polyethylene are used, with biodegradable components added as additives to impart biodegradability. However, the synthetic resin itself is not biodegradable. Additionally, any non-biodegradable synthetic resin left behind poses a risk of soil contamination.

Attempts have been made to manufacture mulching films using polybutylene adipate terephthalate (PBAT), a biodegradable plastic. However, while PBAT exhibits high elongation, its mechanical properties, such as Young's modulus, are inferior compared to traditional films like polyethylene. Furthermore, PBAT is a 100% petroleum-based material, resulting in a low bio-based content.

Efforts have been made to enhance the properties of polybutylene adipate terephthalate (PBAT) by compounding it with various biodegradable materials and increasing the bio-based content. However, the compatibility between polybutylene adipate terephthalate and other biodegradable materials is low, leading to reduced tensile properties.

### SUMMARY OF THE INVENTION

### TECHNICAL PROBLEM

The present invention aims to provide a biodegradable composition with excellent biodegradability, compatibility, and thermal diffusivity, and a biodegradable film manufactured therefrom, which exhibits superior mechanical properties such as biodegradability and tensile strength, with an increased content of bio-based raw materials.

### TECHNICAL SOLUTION

According to one embodiment of the present invention, a biodegradable composition is provided that includes polybutylene adipate terephthalate with maleic acid ester-bonded to the terminal hydroxyl group and the biodegradable composition has a peak area ratio according to the following formula 1 of 0.20 or more 0.50 or less.

Additionally, according to another embodiment of the present invention, a biodegradable film is provided that includes polybutylene adipate terephthalate with maleic acid ester-bonded to the terminal hydroxyl group and the biodegradable film has a peak area ratio according to the following formula 1 of 0.20 or more 0.50 or less.

Hereinafter, the biodegradable composition and biodegradable film according to specific embodiments of the invention will be described in more detail.

Throughout this specification, unless otherwise specified, the terms "comprising" or "including" refer to the inclusion of any component (or ingredient) without limitation, and should not be interpreted as excluding the addition of other components (or ingredients).

Also, unless otherwise specified in this specification, the weight average molecular weight of substances such as polybutylene adipate terephthalate and polybutylene adipate terephthalate with maleic acid ester-bonded to the terminal hydroxyl group can be measured using gel permeation chromatography (GPC). Specifically, the prepolymer or copolymer is dissolved in chloroform to a concentration of 2 mg/ml, and 20 µL is injected into the GPC, which is analyzed at 40°C. At this time, chloroform is used as the mobile phase of the GPC, introduced at a flow rate of 1.0 mL/min, and two Agilent Mixed-B columns are connected in series for use, with an RI Detector as the detector. The Mw value is derived using a calibration curve formed by polystyrene standard samples. Nine types of polystyrene standard samples with weight average molecular weights of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol were used.

To manufacture a composition for producing biodegradable films, biodegradable resins can be mixed. For example, polybutylene adipate terephthalate can be compounded with another biodegradable material such as plasticized starch. However, since polybutylene adipate terephthalate is hydrophobic, whereas thermoplastic starch is hydrophilic, they do not mix well, leading to reduced compatibility.

In response to this, the inventors discovered that when the biodegradable composition includes polybutylene adipate terephthalate with maleic acid ester-bonded to the terminal hydroxyl group, and the biodegradable composition has the peak area ratio according to Formula 1 of 0.20 or more 0.50 or less, the compatibility between biodegradable resins is improved. This results in enhanced mechanical properties, such as tensile strength, of the biodegradable film produced from this composition. $Peak Area Ratio = P 1 / \left(P1+P2\right)$ In Formula 1,
P1 is the peak area in the range of 6.0 ppm or more, less than 7.0 ppm in the 1H-NMR spectrum of the biodegradable composition, and
P2 is the peak area in the range of 3.5 ppm or more, less than 4.0 ppm in the 1H-NMR spectrum of the biodegradable composition.

The peak area ratio can be, for example, 0.21 or more, 0.22 or more, 0.23 or more, 0.25 or more, 0.30 or more, and 0.49 or less, 0.47 or less, 0.45 or less, 0.44 or less, 0.42 or less, 0.40 or less, 0.39 or less.

The more the peak area ratio satisfies the above range, the better the distribution of the dispersed phase of the biodegradable resin in the continuous phase of the composition, leading to excellent compatibility. The peak area ratio can be controlled based on the composition of the biodegradable composition, the type of compatibilizer, particularly the inclusion of 'polybutylene adipate terephthalate with maleic acid ester-bonded to the terminal hydroxyl group', its content, or the content of maleic acid included therein, but is not limited to these factors.

On the other hand, if the peak area ratio is excessively high, the compatibility of the biodegradable composition may decrease. If the peak area ratio is excessively low, the thermal diffusivity decreases, leading to inferior moldability and/or processability, and increased process operating costs. In the process of manufacturing a film by reactive extrusion of the biodegradable composition, the compound discharged from the extruder is cooled by passing through a cooling water tank and then cut (pelletized). If the thermal diffusivity is low, the cooling speed of the compound discharged from the extruder is slow, making cutting difficult. Consequently, moldability and/or processability may become inferior, or additional cooling equipment may be needed, increasing process operating costs. Meanwhile, the biodegradable composition may be a mixture containing the specified configuration as a composition, or an extruded composition formed after the extrusion process including the specified configuration.

The biodegradable composition may include polybutylene adipate terephthalate with maleic acid is ester-bonded to the terminal hydroxyl group. When the biodegradable composition includes 'polybutylene adipate terephthalate with maleic acid ester-bonded to the terminal hydroxyl group,' it can improve the compatibility of resin materials like polybutylene adipate terephthalate and thermoplastic starch. Additionally, as the content of thermoplastic starch in the biodegradable composition increases, it becomes more economical due to lower costs, enhances biodegradability, and increases the content of bio-based carbon. By using 'polybutylene adipate terephthalate with maleic acid ester-bonded to the terminal hydroxyl group' as a compatibilizer in the biodegradable composition, it is possible to include a large amount of thermoplastic starch and achieve the aforementioned effects. Furthermore, 'polybutylene adipate terephthalate with maleic acid ester-bonded to the terminal hydroxyl group' can act as a chain extender to increase molecular weight, enhance melt viscosity, and improve formability such as elongation.

The 'polybutylene adipate terephthalate with maleic acid ester-bonded to the terminal hydroxyl group' can be prepared by the ester reaction of maleic acid with the terminal hydroxyl group of polybutylene adipate terephthalate. For example, the polybutylene adipate terephthalate with maleic acid ester-bonded to the terminal hydroxyl group can be represented by the following chemical formulas 1 or 2.

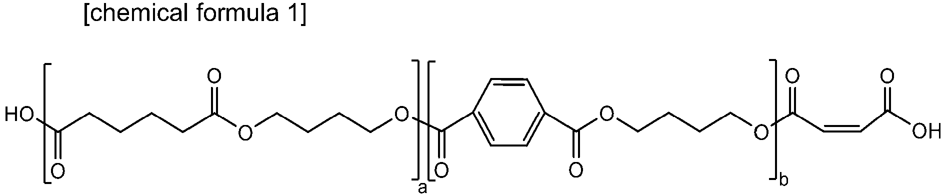

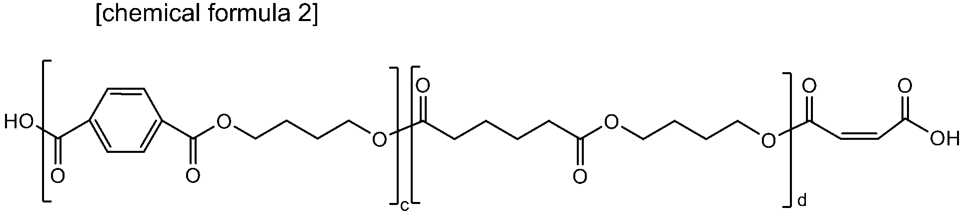

In the above chemical formulas 1 and 2, a to d are each independently an integer from 1 to 500.

The 'polybutylene adipate terephthalate with maleic acid ester-bonded to the terminal hydroxyl groups' represented by Chemical Formula 1 can be ester-bonded by the reaction of one carboxyl group contained in maleic acid with the terminal hydroxyl group of polybutylene adipate terephthalate. Additionally, the 'polybutylene adipate terephthalate with maleic acid ester-bonded to the terminal hydroxyl groups' represented by Chemical Formula 2 can be ester-bonded by the reaction of each of the two carboxyl groups contained in maleic acid with the terminal hydroxyl groups of different polybutylene adipate terephthalate molecules.

The polybutylene adipate terephthalate with maleic acid ester-bonded to terminal hydroxyl groups can be manufactured by ester reaction of maleic acid and polybutylene adipate terephthalate as described above. By adjusting the content of maleic acid, the content of polybutylene adipate terephthalate, reaction temperature, reaction time, type and content of additives, it is possible to produce the polybutylene adipate terephthalate with maleic acid ester-bonded to terminal hydroxyl groups and to control its weight-average molecular weight, structure, viscosity, etc.

Meanwhile, in the past, there were cases of using a compatibilizer where maleic anhydride is graft-bonded to polybutylene adipate terephthalate, but the grafting reaction efficiency is low due to difficulty in radical formation in the middle of the polybutylene adipate terephthalate chain or steric hindrance. In contrast, the polybutylene adipate terephthalate with maleic acid ester-bonded has the advantage of significantly higher reaction efficiency.

Moreover, when using a 'compatibilizer where maleic anhydride is graft-bonded to polybutylene adipate terephthalate' instead of 'polybutylene adipate terephthalate with maleic acid ester-bonded to the terminal hydroxyl groups' in the biodegradable composition and biodegradable film, additional process operations and long process operation times are required to manufacture a compatibilizer with low reaction efficiency, leading to high manufacturing costs. Furthermore, since a highly toxic radical initiator must be used, there are issues with environmental safety that require careful handling.

Polybutylene adipate terephthalate with maleic acid ester-bonded to the terminal hydroxyl group may have a weight average molecular weight of 50,000 or more 200,000 or less, 70,000 or more 190,000 or less, 90,000 or more 180,000 or less, 100,000 or more 170,000 or less, or 120,000 or more 160,000 or less. If the weight average molecular weight of the polybutylene adipate terephthalate with maleic acid ester-bonded to the terminal hydroxyl group does not meet the aforementioned range, the compatibility improvement effect may not manifest, leading to a decrease in mechanical properties such as the tensile strength of films made from the composition.

Furthermore, it is preferable that the polybutylene adipate terephthalate with maleic acid ester-bonded to the terminal hydroxyl group has a smaller weight average molecular weight than the polybutylene adipate terephthalate included in the biodegradable composition according to the embodiment. For example, the weight average molecular weight of the polybutylene adipate terephthalate with maleic acid ester-bonded to the terminal hydroxyl group may be 0.9 times or less relative to the weight average molecular weight of the polybutylene adipate terephthalate. For example, the weight average molecular weight of the polybutylene adipate terephthalate with maleic acid ester-bonded to the terminal hydroxyl group may be 0.4 times or more 0.8 times or less, 0.5 times or more 0.7 times or less, or 0.5 times or more 0.6 times or less that of the polybutylene adipate terephthalate.

Additionally, when manufacturing a film by reactive extrusion of the biodegradable composition according to the embodiment, it is preferable that the polybutylene adipate terephthalate with maleic acid ester-bonded to the terminal hydroxyl group has a lower viscosity compared to other components, such as polybutylene adipate terephthalate and thermoplastic starch, at the processing temperature. When the compatibilizer, polybutylene adipate terephthalate with maleic acid ester-bonded to the terminal hydroxyl group, has a lower viscosity than other components, it exhibits excellent fluidity during extrusion, thus being well-distributed at the interface between polybutylene adipate terephthalate and thermoplastic starch, which can enhance compatibility.

For example, the viscosity of the polybutylene adipate terephthalate with maleic acid ester-bonded to the terminal hydroxyl group may range from 1,000 Pa.s or more 5,000 Pa.s or less at a temperature of 120 °C to 180 °C, 130 °C to 170 °C, 140 °C to 160 °C, or 150 °C. For instance, the viscosity may be 1,300 Pa.s or more, 1,600 Pa.s or more, 1,800 Pa.s or more, 2,000 Pa.s or more, 2,100 Pa.s or more, 2,200 Pa.s or more, and 4,800 Pa.s or less, 4,600 Pa.s or less, 4,400 Pa.s or less.

If the viscosity of the polybutylene adipate terephthalate with maleic acid ester-bonded to the terminal hydroxyl group is excessively high, the compatibility improvement effect may not be realized, leading to a decrease in mechanical properties such as the tensile strength of films made from the composition. Conversely, if the viscosity is excessively low, the thermal diffusivity of the biodegradable composition may decrease, resulting in inferior moldability and/or processability, and potentially increasing operational costs.

Additionally, the polybutylene adipate terephthalate with maleic acid ester-bonded to the terminal hydroxyl group can contain maleic acid in an amount of 2.0% by weight or more 5.0% by weight or less relative to 100% by weight of the polybutylene adipate terephthalate included in the polybutylene adipate terephthalate with maleic acid ester-bonded to the terminal hydroxyl group. For example, it may include 2.2% by weight or more, 2.4% by weight or more, 2.5% by weight or more, 2.7% by weight or more, 2.9% by weight or more, 3.0% by weight or more, and 4.8% by weight or less, 4.6% by weight or less, 4.5% by weight or less, 4.3% by weight or less, 4.1% by weight or less, 4.0% by weight or less.

If the maleic acid content is too low in the polybutylene adipate terephthalate with maleic acid ester-bonded to the terminal hydroxyl group, the compatibility of the biodegradable composition may decrease. Conversely, if the maleic acid content is too high, the thermal diffusivity of the biodegradable composition may decrease, leading to inferior moldability and/or processability and increased operational costs.

In the biodegradable composition according to the embodiment, the polybutylene adipate terephthalate with maleic acid ester-bonded to the terminal hydroxyl group can be included in an amount of 1.5% by weight or more 10.0% by weight or less relative to the total of 100% by weight of the polybutylene adipate terephthalate and thermoplastic starch. For example, it can include 1.7% by weight or more, 1.9% by weight or more, 2.0% by weight or more, 2.5% by weight or more, 3.0% by weight or more, 3.5% by weight or more, 4.0% by weight or more, and 9.0% by weight or less, 7.0% by weight or less, 6.0% by weight or less, 5.0% by weight or less. If the content of polybutylene adipate terephthalate with maleic acid ester-bonded to the terminal hydroxyl group is too low, the effect of improving compatibility may not appear, leading to a decrease in mechanical properties such as tensile strength and elongation at break of the film made from the composition. Conversely, if the content of polybutylene adipate terephthalate with maleic acid ester-bonded to the terminal hydroxyl group is too high, the melt viscosity may become excessively high, resulting in reduced moldability.

In the biodegradable composition according to the present embodiment, polybutylene adipate terephthalate with maleic acid ester-bonded to the terminal hydroxyl group can be included in an amount of 0.5% by weight or more and 10.0% by weight or less, based on 100% by weight of the total solid contents of the biodegradable composition. For example, based on 100% by weight of the total solid contents of the biodegradable composition, polybutylene adipate terephthalate with maleic acid ester-bonded to the terminal hydroxyl group can be included in an amount of 1.0% by weight or more, 1.3% by weight or more, 1.5% by weight or more, 1.8% by weight or more, 1.9% by weight or more, and 2.0% by weight or more, and can be included in an amount of 9.0% by weight or less, 7.0% by weight or less, 6.0% by weight or less, and 5.0% by weight or less.

The biodegradable composition according to the present embodiment may include polybutylene adipate terephthalate (PBAT) as a biodegradable resin. The polybutylene adipate terephthalate can be included in an amount of 30% by weight or more 80% by weight or less, based on 100% by weight of the total solid contents of the biodegradable composition, and more specifically, it can be included in an amount of 30% by weight or more, 35% by weight or more, 40% by weight or more, and 80% by weight or less, 75% by weight or less, 70% by weight or less. If the polybutylene adipate terephthalate (PBAT) is included in too small an amount in the biodegradable composition, the elongation of the film produced therefrom may be reduced, and if the polybutylene adipate terephthalate is included in too large an amount in the biodegradable composition, the tensile properties, such as Young's modulus and yield tensile strength, of the film produced therefrom may deteriorate.

In addition, the biodegradable composition may include thermoplastic starch to improve the processability of polybutylene adipate terephthalate and to accelerate the biodegradation rate. The thermoplastic starch may be starch, a natural polymer, to which a plasticizer is added to impart thermoplasticity, allowing it to change shape freely at temperatures above a certain level, similar to conventional general-purpose resins such as polyethylene, polystyrene, and polypropylene.

The thermoplastic starch may include one or more selected from the group consisting of rice starch, wheat starch, corn starch, sweet potato starch, potato starch, tapioca starch, cassava starch, and their modified starches.

Additionally, the plasticizer included in the starch, a natural polymer, may be one or more selected from the group consisting of isosorbide, glycerol, sorbitol, fructose, formamide, xylitol, corn oil, and edible oil. The plasticizer may be included in an amount of 5% by weight or more 50% by weight or less, 10% by weight or more 45% by weight or less, or 15% by weight or more 35% by weight or less, based on 100% by weight of the total thermoplastic starch.

The biodegradable composition according to the present embodiment may include thermoplastic starch in an amount of 10% by weight or more and 50% by weight or less, based on 100% by weight of the total solid contents of the biodegradable composition. For example, based on 100% by weight of the total solids of the biodegradable composition, the thermoplastic starch may be included in an amount of 10% by weight or more, 15% by weight or more, 20% by weight or more, 25% by weight or more, and 45% by weight or less, 40% by weight or less, 35% by weight or less. As the content of thermoplastic starch in the biodegradable composition increases, the price becomes more economical, the biodegradability improves, and the content of bio-based carbon can increase. However, if the thermoplastic starch is included in too large an amount in the biodegradable composition, the elongation of the film produced therefrom may decrease, and if the thermoplastic starch is included in too small an amount in the biodegradable composition, the biodegradation rate may slow down, and the tensile properties, such as Young's modulus and yield tensile strength, of the film produced therefrom may deteriorate.

In the biodegradable composition according to the above embodiment, hydrophobic polybutylene adipate terephthalate and hydrophilic thermoplastic starch may be included. The improvement in compatibility can be considered enhanced when the dispersed phase of thermoplastic starch is densely and uniformly distributed within the polybutylene adipate terephthalate matrix. Moreover, the compatibility is considered to improve as the adhesive strength at the interface between polybutylene adipate terephthalate and thermoplastic starch increases. In other words, the more densely and uniformly the dispersed phase of thermoplastic starch is distributed within the polybutylene adipate terephthalate matrix, and the stronger the adhesive strength at the interface between polybutylene adipate terephthalate and thermoplastic starch, the better the compatibility.

Additionally, whether the compatibility is improved can be numerically verified through analysis using a Dynamic Mechanical Analyzer (DMA). For example, the glass transition temperature (Tg) of thermoplastic starch and polybutylene adipate terephthalate can be measured using a Dynamic Mechanical Analyzer (DMA) to confirm the improvement in compatibility.

Specifically, the more densely and uniformly the dispersed phase of thermoplastic starch is distributed within the polybutylene adipate terephthalate matrix, the lower the glass transition temperature (Tg) of thermoplastic starch becomes, and this can be analyzed using a Dynamic Mechanical Analyzer to confirm whether compatibility is improved. Furthermore, the stronger the adhesion at the interface between polybutylene adipate terephthalate and thermoplastic starch, the more effectively the dispersed phase of thermoplastic starch transfers stress to polybutylene adipate terephthalate, increasing the glass transition temperature (Tg) of polybutylene adipate terephthalate, particularly the glass transition temperature (Tg) of the butylene-adipate repeating unit, which is the soft segment. This can be analyzed using a Dynamic Mechanical Analyzer to confirm whether compatibility is improved.

Therefore, the better the compatibility between polybutylene adipate terephthalate and thermoplastic starch, the more the glass transition temperature (Tg) of thermoplastic starch decreases. For example, the glass transition temperature (Tg) of thermoplastic starch may be 10 °C or more 140 °C or less, 15 °C or more 120 °C or less, 20 °C or more 100 °C or less, 25 °C or more 80 °C or less, 25 °C or more 50 °C or less, or 25 °C or more 40 °C or less.

Additionally, the better the compatibility between polybutylene adipate terephthalate and thermoplastic starch, the more the glass transition temperature (Tg) of polybutylene adipate terephthalate increases. For example, the glass transition temperature (Tg) of polybutylene adipate terephthalate may be -23.0 °C or more -10.0 °C or less, or -22.5 °C or more -15.0 °C or less.

Furthermore, the absolute value of the difference in the glass transition temperature (Tg) between the thermoplastic starch and polybutylene adipate terephthalate may be 20 °C or more 70 °C or less, 25 °C or more 65 °C or less, 30 °C or more 60 °C or less, or 35 °C or more 59 °C or less.

According to another embodiment of the present invention, a biodegradable film is provided, which includes a biodegradable composition comprising polybutylene adipate terephthalate and thermoplastic starch, and the biodegradable film has a peak area ratio according to Formula 1 of 0.20 or more 0.50 or less.

The peak area ratio is as described above in the biodegradable composition according to the one embodiment. Additionally, the biodegradable film may further include polybutylene adipate terephthalate with maleic acid ester-bonded to the terminal hydroxyl groups, as described above in the biodegradable composition according to the one embodiment. Furthermore, the maleic acid content, molecular weight, structure, etc., of the polybutylene adipate terephthalate, the thermoplastic starch, and the polybutylene adipate terephthalate with maleic acid ester-bonded to the terminal hydroxyl groups are as described above.

For example, the polybutylene adipate terephthalate may be included in an amount of 30 % by weight or more 80% by weight or less, based on 100% by weight of the total biodegradable film, and more specifically, it may be included in an amount of 30% by weight or more, 35% by weight or more, 40% by weight or more, and 80% by weight or less, 75% by weight or less, 70% by weight or less.

Additionally, based on 100% by weight of the total of polybutylene adipate terephthalate and thermoplastic starch, the polybutylene adipate terephthalate with maleic acid ester-bonded to the terminal hydroxyl groups may be included in an amount of 1.5% by weight or more 10.0% by weight or less.

Furthermore, based on 100% by weight of the total biodegradable film, the polybutylene adipate terephthalate with maleic acid ester-bonded to the terminal hydroxyl groups may be included in an amount of 0.5% by weight or more 10.0% by weight or less. For example, based on 100% by weight of the biodegradable film, the polybutylene adipate terephthalate with maleic acid ester-bonded to the terminal hydroxyl groups may be included in an amount of 0.7% by weight or more, 0.9% by weight or more, 1.0% by weight or more, 2.0% by weight or more, and in an amount of 9.0% by weight or less, 7.0% by weight or less, 6.0% by weight or less, 5.0% by weight or less.

Additionally, based on 100% by weight of the total biodegradable film, the thermoplastic starch may be included in an amount of 10% by weight or more 50% by weight or less. For example, based on 100% by weight of the biodegradable film, the thermoplastic starch may be included in an amount of 10% by weight or more, 15% by weight or more, 20% by weight or more, 25% by weight or more, and in an amount of 45% by weight or less, 40% by weight or less, 35% by weight or less.

The method for manufacturing the biodegradable film is not particularly limited, but it can be obtained using the biodegradable composition according to the above embodiment by conventional film manufacturing methods such as the known inflation method, tubular method, and T-die casting method. For example, the composition can be pelletized, and the pellets can be dried at 60 to 100 °C for more than 6 hours to control the moisture content to 1,200 ppm or less, 500 ppm or less, or 200 ppm or less. Subsequently**,** the pelletized composite can be applied to a release film, and then placed in a heat press to apply pressure and produce the film. At this time, the temperature may be 130 °C to 250 °C, 150 °C to 220 °C, or 160 °C to 200 °C, and the pressure may be 5 MPa to 20 MPa, 8 MPa to 17 MPa, or 10 MPa to 15 MPa.

In addition, when extruding and pelletizing the composition, the extrusion temperature during the extrusion process can be 110 °C to 250 °C, 120 °C to 220 °C, 130 °C to 200 °C, or 140 °C to 180 °C, and the screw rotation speed of the extruder can be 200 rpm to 400 rpm, 230 rpm to 370 rpm, 250 rpm to 350 rpm, or 300 rpm to 330 rpm.

The thickness of the biodegradable film can be 10 to 300 *µ*m, more specifically 10 *µ*m or more, 13 *µ*m or more, 15 *µ*m or more, 20 *µ*m or more, 25 *µ*m or more, and 300 *µ*m or less, 200 *µ*m or less, 150 *µ*m or less, 100 *µ*m or less, 80 *µ*m or less, 50 *µ*m or less. Due to the thickness of the film being within the above range, it has strong elasticity, excellent handleability, and good winding and unwinding properties of the roll.

If the film thickness is excessively thin, the tensile strength, tear strength, and elongation may deteriorate, causing holes or tears in the film during use. If the film thickness is excessively thick, cost competitiveness may decrease. Furthermore, the biodegradable film can be used as agricultural mulching film, disposable gloves, medical individual packaging, food packaging, garbage bags, or bags for various industrial products.

The biodegradable film may have a tensile strength measured according to ASTM D882 of 5 MPa or more, 7 MPa or more, 8 MPa or more, or 5 MPa to 30 MPa.

Additionally, the biodegradable film may have an elongation at break measured according to ASTM D882 of 300% or more, 350% or more, 400% or more, 420% or more, 430% or more, or 300% to 700%.

Moreover, the biodegradable film may have a Young's Modulus measured according to ASTM D882 of 30 MPa or more, 40 MPa or more, 50 MPa or more, 60 MPa or more, or 30 MPa to 800 MPa.

Furthermore, the biodegradable film may have a tear strength measured according to ASTM 1922 of 200 gf or more, 220 gf or more, 240 gf or more, 260 gf or more, 280 gf or more, or 285 gf or more.

The maximum tensile strength, elongation at break, Young's Modulus, and tear strength of the biodegradable film can satisfy the aforementioned range of values measured in the MD (Machine Direction) and TD (Transverse Direction) directions, respectively.

### ADVANTAGEOUS EFFECTS

According to the present invention, a biodegradable composition with excellent biodegradability, compatibility, and thermal diffusivity can be provided, along with a biodegradable film manufactured from it that exhibits superior mechanical properties such as biodegradability and tensile strength, and has an increased content of bio-based materials.

### DETAILED DESCRIPTION OF THE EMBODIMENTS

The invention will be described in more detail in the following examples. However, the following examples are merely illustrative of the present invention and do not limit the scope of the invention.

### Manufacturing Example 1: Preparation of Thermoplastic Starch

Corn starch 700 g and glycerol 300 g were mixed using a mixer and then fed into an extruder for compounding. The temperature of the extruder was set to 120 °C, and the screw speed was set to 150 rpm. The extruded strand was cut with a pelletizer to produce thermoplastic starch pellets.

### <Examples and Comparative Examples>

### Example 1

### (1) Preparation of Polybutylene Adipate Terephthalate with Maleic Acid Ester-Bonded to Terminal Hydroxyl Group

Polybutylene adipate terephthalate (PBAT, Solpol 1000N, SOLTECH Co.) 100 g and maleic anhydride 3 g were fed into an extruder at a feed rate of 1Kg/hr and reacted while mixing for 10 minutes at an extrusion temperature of 140 °C and a screw speed of 300 rpm to produce polybutylene adipate terephthalate with maleic acid ester-bonded to the terminal hydroxyl group (weight average molecular weight: 148,000). This was cut with a pelletizer to produce pellets.

### (2) Preparation of Biodegradable Composition

Polybutylene adipate terephthalate (PBAT, Solpol 1000N, SOLTECH Co.) 750 g, the thermoplastic starch 250 g produced in Manufacturing Example 1, and the 'polybutylene adipate terephthalate with maleic acid ester bonded to the terminal hydroxyl group' 50 g were hand-mixed to prepare the composition.

Then, it was fed into an extruder for compounding, with the extruder temperature range set to 150 °C and the screw speed set to 200 rpm. The extruded strand was cut with a pelletizer to produce composite pellets.

### Example 2

### (1) Preparation of Polybutylene Adipate Terephthalate with Maleic Acid Ester-Bonded at Terminal Hydroxyl Group

100 g of polybutylene adipate terephthalate (PBAT, Solpol 1000N, SOLTECH Co.) and 5 g of maleic anhydride were fed into an extruder at a rate of 1 kg/hr. The mixture was reacted at an extrusion temperature of 140 °C and a screw speed of 300 rpm for 10 minutes to produce polybutylene adipate terephthalate with maleic acid ester-bonded to the terminal hydroxyl group (weight average molecular weight; 149,000). This was then cut into pellets using a pelletizer.

### (2) Preparation of Biodegradable Composition

A composition was prepared by hand mixing 750 g of polybutylene adipate terephthalate (PBAT, Solpol 1000N, SOLTECH Co.), 250 g of thermoplastic starch prepared in Preparation Example 1, and 50 g of the 'polybutylene adipate terephthalate with maleic acid ester-bonded to the terminal hydroxyl group', based on dry weight.

This was then fed into an extruder for compounding, where the temperature range of the extruder was set to 150 °C and the screw speed to 200 rpm. The extruded strand was cut into composite pellets using a pelletizer.

### Example 3

A composition and film were prepared in the same manner as in Example 1, except for controlling the extrusion temperature to 150 °C instead of 140 °C during the '(1) Preparation of polybutylene adipate terephthalate with maleic acid ester-bonded to the terminal hydroxyl group'.

### Example 4

A composition and film were prepared in the same manner as in Example 2, except for controlling the extrusion temperature to 150 °C instead of 140 °C during the '(1) Preparation of polybutylene adipate terephthalate with maleic acid ester-bonded to the terminal hydroxyl group'.

### Example 5

A composition and film were prepared in the same manner as in Example 1, except for controlling the extrusion temperature to 160 °C instead of 140 °C to produce polybutylene adipate terephthalate with maleic acid ester-bonded to the terminal hydroxyl group with a weight average molecular weight of 149,000.

### Example 6

A composition and film were prepared in the same manner as in Example 2, except for controlling the extrusion temperature to 160°C instead of 140°C during the '(1) Preparation of polybutylene adipate terephthalate with maleic acid ester-bonded to the terminal hydroxyl group'.

### Comparative Example 1

### (1) Preparation of polybutylene Adipate Terephthalate with Maleic Acid Ester-Bonded to the Terminal Hydroxyl Group

Polybutylene adipate terephthalate (PBAT, Solpol 1000N, SOLTECH Co.) 100 g and maleic anhydride 1 g were introduced into an internal mixer at a feed rate of 1 kg/hr. The mixture was reacted by mixing for 10 minutes at an extrusion temperature of 140 °C and a screw speed of 300 rpm, to prepare polybutylene adipate terephthalate with maleic acid ester-bonded to the terminal hydroxyl group (weight average molecular weight; 146,000). This was then cut into pellets using a pelletizer.

### (2) Preparation of biodegradable composition

Based on dry weight, 750 g of polybutylene adipate terephthalate (PBAT, Solpol 1000N, SOLTECH Co.), 250 g of thermoplastic starch prepared in Preparation Example 1, and 50 g of the 'polybutylene adipate terephthalate with maleic acid ester-bonded to the terminal hydroxyl group' were hand-mixed to prepare the composition.

Subsequently, it was introduced into an extruder for compounding. The temperature range of the extruder was set at 150 °C, and the screw speed was set at 200 rpm. The extruded strands were cut into composite pellets using a pelletizer.

### Comparative Example 2

### (1) Preparation of Polybutylene Adipate Terephthalate with Maleic Acid Ester-Bonded to Terminal Hydroxyl Group

Polybutylene adipate terephthalate (PBAT, Solpol 1000N, SOLTECH Co.) 100 g and maleic anhydride 10 g were introduced into an internal mixer at a feed rate of 1 kg/hr. The mixture was reacted by mixing for 10 minutes at an extrusion temperature of 160 °C and a screw speed of 300 rpm, to prepare polybutylene adipate terephthalate with maleic acid esterified at the terminal hydroxyl group (weight average molecular weight; 148,000). It was confirmed that sufficient cooling was not achieved during pellet manufacturing, preventing the cutting into pellets. Therefore, additional cooling equipment was added to proceed with further cooling, after which the pellets were manufactured.

### (2) Preparation of Biodegradable Composition

Based on dry weight, 750 g of polybutylene adipate terephthalate (PBAT, Solpol 1000N, SOLTECH Co.), 250 g of thermoplastic starch prepared in Preparation Example 1, and 50 g of the 'polybutylene adipate terephthalate with maleic acid ester-bonded to the terminal hydroxyl group' were hand-mixed to prepare the composition.

Subsequently, it was introduced into an extruder for compounding. The temperature range of the extruder was set at 150 °C, and the screw speed was set at 200 rpm. The extruded strands were cut into composite pellets using a pelletizer.

### Evaluation

### 1. Peak Area Ratio

For the compositions of the examples and comparative examples, 1H-NMR analysis was conducted at room temperature using an NMR spectrometer that includes a Varian Unity Inova (500 MHz) spectrometer with a triple resonance 5mm probe. The substance to be analyzed was diluted in an NMR solvent (D2O) to a concentration of about 10 mg/ml and measured at 300 MHz.

The following formula 1 was derived and calculated from the 1H-NMR spectrum and recorded in Table 1 below. $Peak Area Ratio = P 1 / \left(P1+P2\right)$

In the above formula 1,
P1 is the peak area in the range of 6.0 ppm or more, less than 7.0 ppm in the 1H-NMR spectrum of the biodegradable composition, and
P2 is the peak area in the range of 3.5 ppm or more, less than 4.0 ppm in the 1H-NMR spectrum of the biodegradable composition.

### 2. Compatibility (Non-recovery Area) Evaluation

The compatibility of the compositions from the examples and comparative examples was evaluated by measuring the specific surface area of the compositions. Specifically, the compositions were melted on a parallel plate geometry with a diameter of 25 mm on a DHR (Discovery Hybrid Rheometer) from TA Instruments and then pressed to a gap of 1 mm for loading. The storage modulus was measured while increasing the strain from 0.01% to 75% and then decreasing it back to 0.01% at 150 °C and a frequency of 1 Hz. The non-recoverable area is the difference between the area of the storage modulus from 0.01% to 75% strain and the area of the storage modulus from 75% to 0.01% strain

The area under the storage modulus curve refers to the area beneath the line graph with strain on the x-axis and storage modulus on the y-axis. In addition, the non-recovery area is a factor in the degree to which the composition recovers when the strain is increased and then decreased again. A smaller non-recoverable area indicates better distribution of the dispersed phase in the continuous phase, resulting in superior compatibility.

### 3. Tensile Property Evaluation

The pellets of the examples and comparative examples were used to produce films with a thickness of 15 µm at 150 °C using a Film blown unit (BL50T) from Collin, and the tensile properties were evaluated according to ASTM D882. The tensile properties include tensile strength and elongation at break in the machine direction (MD), and the results are shown in Table 1 below.

**[Table 1]**

| | Peak Area Ratio | Non-recovery Area | tensile strength (MPa) | elongation at break (%) |
|---|---|---|---|---|
| Example 1 | 0.28 | 9224 | 19.0 | 375 |
| Example 2 | 0.33 | 7925 | 20.4 | 390 |
| Example 3 | 0.31 | 8002 | 19.9 | 381 |
| Example 4 | 0.35 | 6604 | 20.8 | 389 |
| Example 5 | 0.38 | 5844 | 20.5 | 388 |
| Example 6 | 0.45 | 4536 | 21.4 | 410 |
| Comparative Example 1 | 0.18 | 18409 | 16.9 | 339 |
| Comparative Example 2 | 0.52 | 4327 | 24.0 | 447 |

According to Table 1, Examples 1 to 6, with a peak area ratio of 0.20 or more 0.50 or less, have low non-recovery area, indicating excellent compatibility. It was also confirmed that Examples 2, 4, and 6 have superior mechanical properties in terms of tensile strength and elongation at break. On the other hand, Comparative Example 1 was found to have excessively high non-recovery area, indicating inferior compatibility. Comparative Example 2, as mentioned above, did not undergo sufficient cooling during pellet manufacturing, making it difficult to cut into pellets, which resulted in inferior processability and moldability into pellets and similar forms.

## Claims

1. A biodegradable composition comprising polybutylene adipate terephthalate with maleic acid ester-bonded to the terminal hydroxyl group, and
wherein the biodegradable composition has a peak area ratio according to the following formula 1 of 0.20 or more 0.50 or less: $Peak area ratio = P 1 / \left(P1+P2\right)$ in the formula 1,
P1 is the peak area in the range of 6.0 ppm or more, less than 7.0 ppm in the 1H-NMR spectrum of the biodegradable composition, and
P2 is the peak area in the range of 3.5 ppm or more, less than 4.0 ppm in the 1H-NMR spectrum of the biodegradable composition.

2. The biodegradable composition of claim 1,
further comprising polybutylene adipate terephthalate and thermoplastic starch.

3. The biodegradable composition of claim 1,
wherein the polybutylene adipate terephthalate with maleic acid ester-bonded to the terminal hydroxyl group is represented by the following chemical formula 1 or 2: 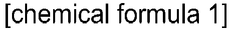 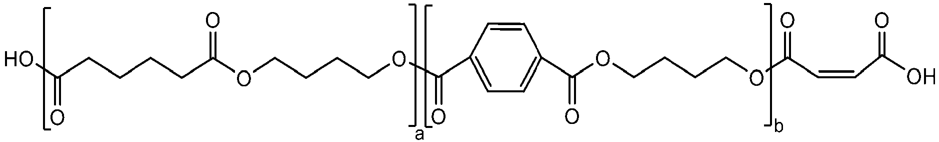 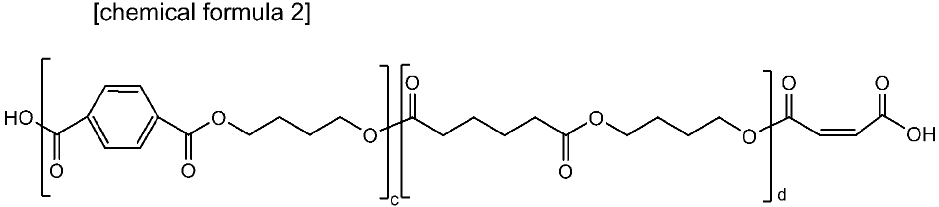 in the above chemical formulas 1 and 2,
a to d are each independently an integer from 1 to 500.

4. The biodegradable composition of claim 1,
wherein the biodegradable composition includes polybutylene adipate terephthalate with maleic acid ester-bonded to the terminal hydroxyl group in an amount of 0.5% % by weight or more 10.0% by weight or less, relative to a total of 100% by weight of the solid contents of the biodegradable composition.

5. The biodegradable composition of claim 2,
wherein the thermoplastic starch includes one or more selected from the group consisting of rice starch, wheat starch, corn starch, sweet potato starch, potato starch, tapioca starch, cassava starch, and their modified starches.

6. The biodegradable composition of claim 2,
wherein the biodegradable composition includes 10% by weight or more 50% by weight or less of the thermoplastic starch, relative to a total of 100% by weight of the solid contents of the biodegradable composition.

7. A biodegradable film, including polybutylene adipate terephthalate with maleic acid ester-bonded to the terminal hydroxyl group, and
wherein the biodegradable film has a peak area ratio according to the following formula 1 of 0.20 or more 0.50 or less: $Peak Area Ratio = P 1 / \left(P1+P2\right)$ in the formula 1,
P1 is the peak area in the range of 6.0 ppm or more, less than 7.0 ppm in the 1H-NMR spectrum for the biodegradable composition, and
P2 is the peak area in the range of 3.5 ppm or more, less than 4.0 ppm in the 1H-NMR spectrum for the biodegradable composition.

8. The biodegradable film of claim 7,
further comprising polybutylene adipate terephthalate and thermoplastic starch.

9. The biodegradable film of claim 7,
wherein the biodegradable film includes polybutylene adipate terephthalate with maleic acid ester-bonded to the terminal hydroxyl group in an amount of 0.5% by weight or more 10.0% by weight or less, relative to a total of 100% by weight of the biodegradable film.

10. The biodegradable film of claim 8,
wherein the biodegradable film includes 10% by weight or more 50% by weight or less of the thermoplastic starch, relative to a total of 100% by weight of the biodegradable film.

11. The biodegradable film of claim 7,
wherein the biodegradable film has a tensile strength of 5 MPa or more, as measured according to ASTM D882.

12. The biodegradable film of claim 7,
wherein the biodegradable film has an elongation at break of 300% or more, as measured according to ASTM D882.

13. The biodegradable film of claim 7,
wherein the biodegradable film has a Young's Modulus of 30 MPa or more, as measured according to ASTM D882.
